# FASCICULE DE BREVET EUROPEEN

(11) **EP 0 442 262 B1**
(45) Date de publication et mention de la délivrance du brevet: **18.08.1993**
(21) Numéro de dépôt: 91100293.9
(22) Date de dépôt: 11.01.1991
(51) Int. Cl.: A63C 5/12

(54) **Procédé d'assemblage d'un ski par surmoulage, et structure de ski obtenue par ce procédé**
Verfahren zur Herstellung eines Skis durch Abguss und nach diesem Verfahren hergestellter Ski
Ski and process for manufacturing same by moulding

(30) Priorité: 15.02.1990 FR 9002070
(43) Date de publication de la demande: 21.08.1991
(73) Titulaire: SALOMON S.A., 74370 Pringy (FR)
(72) Inventeur: Le Masson, Jacques, F-74000 Annecy (FR); Vuarier, Dominique, F-74410 Saint Jorioz (FR)

(56) Documents cités:
- EP-A- 0 081 834
- DE-U- 8 711 227
- FR-A- 2 589 073
- US-A- 3 635 482
- US-A- 4 235 832

## Description

Les skis actuels ont généralement une structure composite dans laquelle sont combinés différents matériaux de manière que chacun d'eux intervienne de façon optimale, compte-tenu de la distribution des contraintes mécaniques. Ainsi, la structure comprend généralement des éléments de protection périphériques, formant la face supérieure et les faces latérales du ski, des éléments internes de résistance ou lames de résistance, constitués en un matériau ayant une grande résistance mécanique et une grande raideur. La structure comprend également des éléments de remplissage tels qu'un noyau central en structure alvéolaire, une semelle de glissement formant la face inférieure du ski et assurant un bon glissement sur la neige, et des carres métalliques inférieures formant les arêtes inférieures du ski.

Pour obtenir les caractéristiques physiques appropriées, la fabrication des skis modernes demande donc d'assembler un nombre relativement important d'éléments en des matériaux différents, ces éléments devant être collés ou soudés les uns aux autres pour obtenir la structure définitive du ski.

Dans les techniques de fabrication des skis par injection, l'une des difficultés importante réside dans le positionnement et le maintien des éléments du ski dans le moule avant l'injection.

Des techniques ont été proposées pour réaliser, préalablement au moulage, plusieurs sous-ensembles, chaque sous-ensemble étant obtenu par solidarisation de plusieurs éléments. Ces techniques conduisent toutefois à multiplier les opérations successives.

Egalement, dans les techniques connues, il apparaît difficile de réaliser des surfaces extérieures de skis présentant une grande précision dimensionnelle.

La présente invention a notamment pour objet d'éviter les inconvénients des procédés connus, en proposant un nouveau procédé d'assemblage particulièrement économique, dans lequel l'assemblage peut être effectué au cours d'une étape unique de moulage.

Le procédé de l'invention permet d'obtenir une bonne adhésion entre les divers éléments, notamment une bonne adhésion avec les éléments de renfort mécaniques.

Le procédé de l'invention permet également d'obtenir un ski dont la forme extérieure est réalisée avec une bonne précision dimensionnelle, la surface extérieure du ski pouvant être obtenue directement par moulage, et son état de surface étant directement déterminé par le moule.

Pour atteindre ces objets ainsi que d'autres, le procédé d'assemblage de ski selon l'invention est tel que :
a) au cours d'une étape préalable, on réalise un sous-ensemble de résistance mécanique par :
   - empilage d'au moins un renfort inférieur, un noyau et un renfort supérieur,
   - insertion dudit empilage dans une gaine rétractable en une matière présentant un pouvoir d'adhésion avec les éléments destinés à être en contact avec elle dans la structure du ski,
   - rétraction de la gaine,
b) au cours d'une étape unique de moulage, on assemble les éléments constitutifs du ski dans un moule en deux parties :
   - on pose les éléments inférieurs de structure de ski comprenant notamment les carres inférieures et la semelle de glisse,
   - on pose le sous-ensemble de résistance mécanique sur les éléments inférieurs de structure de ski,
   - on ferme le moule,
   - on injecte un polymère thermodurcissable pour former, autour du sous-ensemble de résistance mécanique, le revêtement de protection du ski.

Après injection, il s'effectue généralement une étape d'élévation de température de l'ensemble, permettant la polymérisation du polymère thermodurcissable, puis une étape de refroidissement de l'ensemble en dessous de la température de transition vitreuse du revêtement de protection.

L'étape d'élévation de température peut s'effectuer notamment par l'élévation de température dûe à la réaction exothermique de polymérisation du polymère thermodurcissable. Si cette élévation de température n'est pas suffisante, on peut également effectuer un apport extérieur d'énergie calorifique.

L'un au moins des renforts inférieur et supérieur comprend avantageusement, dans l'empilage de l'étape préalable, un tissu préimprégné de résine thermodurcissable non entièrement réticulée, ou un élément en matériau thermoplastique armé de fibres de préférence continues.

Le procédé est cependant compatible avec la présence de renforts mécaniques en métal, associés éventuellement à des films assurant l'adhérence avec des autres matières de la structure du ski.

D'autres objets, caractéristiques et avantages de la présente invention ressortiront de la description suivante de modes de réalisation particuliers, faite en relation avec les figures jointes, parmi lesquelles :
- la figure 1 illustre, en coupe transversale, la première phase de l'étape préalable de réalisation d'un sous-ensemble de résistance mécanique selon l'invention ;
- la figure 2 représente la seconde phase de réalisation du sous-ensemble de résistance mécanique, au cours de l'étape préalable ;
- la figure 3 illustre, en coupe transversale, la pose des éléments dans le moule ;
- la figure 4 illustre l'étape de surmoulage ;
- la figure 5 illustre l'étape de surmoulage selon un autre mode de réalisation de l'invention ; et
- la figure 6 illustre le procédé selon l'invention dans un mode de réalisation à faces latérales inclinées du noyau.

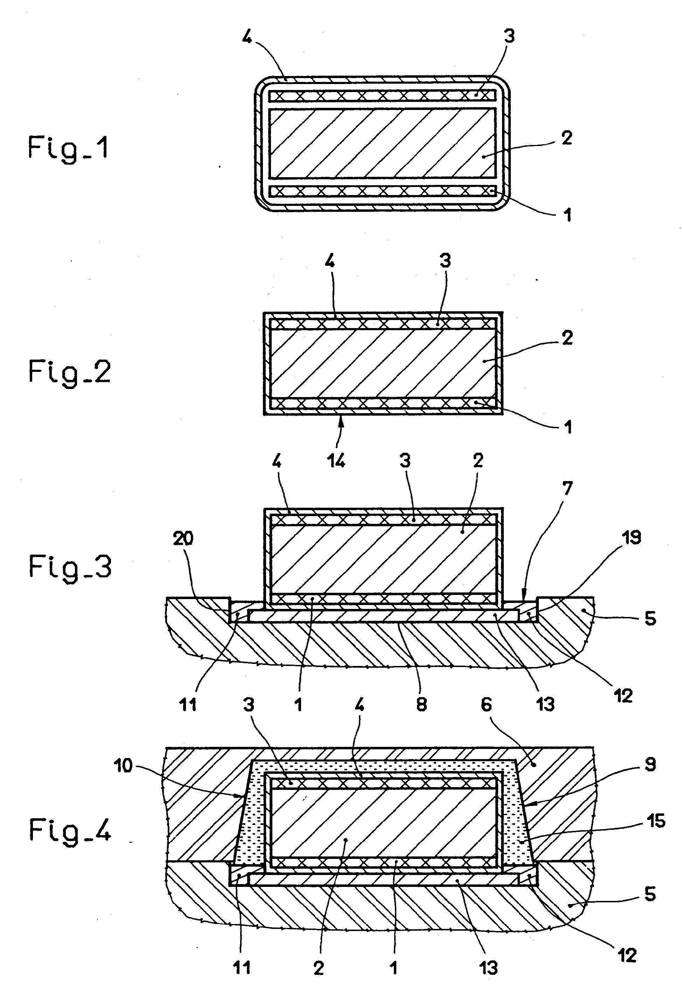

Dans le mode de réalisation de la figure 1, on réalise tout d'abord un empilage d'au moins un élément de renfort inférieur 1, un noyau central 2 et un élément de renfort supérieur 3. On insère ledit empilage formé par le noyau 2 et les deux éléments de renfort 1 et 3 dans une gaine rétractable 4.

Sur la figure 2, par rétraction de la gaine, on obtient un sous-ensemble de résistance mécanique, les éléments du sous-ensemble étant maintenus ensemble par la gaine rétractée. La rétraction de la gaine peut être obtenue par exemple, de manière connue, par un courant d'air chaud projeté sur la gaine.

La gaine 4 doit avantageusement être constituée d'un matériau présentant un pouvoir d'adhésion suffisant avec les éléments destinés à être en contact avec elle dans la structure définitive du ski. La matière constituant la gaine doit en particulier avoir de bonnes propriétés d'adhérence avec la matière constituant les renforts 1 et 3, avec la matière constituant les éléments inférieurs du ski tels que la semelle de glisse, et avec la matière constituant la couche de protection périphérique du ski.

On peut avantageusement utiliser une gaine en polyuréthane thermoplastique, en copolyamide, en ABS (Acrylo Nitrile Butadiène Styrène) ou polyéthylène ou copolymère d'éthylène et d'acétate de vinyle greffé par action d'acide carboxylique, ester d'acide carboxylique ou son anhydre, ou ionomère. La gaine peut avoir une épaisseur de quelques centièmes à quelques dixièmes de millimètres, avantageusement de 0,5 à 3 dixièmes de millimètres.

Sur les figures 3 et 4, au cours d'une étape unique de moulage, on assemble les éléments constitutifs du ski dans un moule en deux parties, comprenant une partie inférieure 5 et une partie supérieure 6. La partie inférieure 5 du moule comprend un évidement 7 destiné à recevoir les éléments constitutifs inférieurs du ski, l'évidement 7 étant ouvert sur le dessus pour être obturé par l'élément supérieur 6 du moule.

L'évidement 7 est limité par une surface inférieure plane 8 dont la largeur correspond à la largeur de surface inférieure du ski, et par deux facettes latérales 19 et 20 destinées à mouler les parties inférieures des faces latérales du ski. L'élément supérieur 6 du moule comprend une paroi supérieure, et deux surfaces latérales 9 et 10 destinées à former les faces latérales du ski. Dans le mode de réalisation représenté, les surfaces 9 et 10 sont inclinées pour former les surfaces latérales inclinées de ski. D'autres formes sont possibles sans sortir du domaine de l'invention.

On pose, dans le fond de l'évidement 7, les éléments inférieurs du ski comprenant les carres métalliques inférieures 11 et 12 et la semelle inférieure de glisse 13.

On pose, sur les éléments inférieurs 11, 12 et 13 du ski, le sous-ensemble de résistance mécanique précédemment formé par assemblage du noyau 2, des éléments de renfort 1 et 3, et de la gaine rétractée 4. La face inférieure 14 du sous-ensemble de résistance mécanique vient en appui sur la face supérieure de semelle 13.

Sur la figure 4, on ferme le moule par adaptation de la partie supérieure 6 sur la partie inférieure 5, et on injecte un polymère thermodurcissable, par un ou plusieurs conduits d'injection non représentés sur les figures, pour former, autour du sous-ensemble de résistance mécanique, le revêtement 15 de protection du ski.

On élève ensuite la température de l'ensemble, pour polymériser le polymère thermodurcissable ; on refroidit l'ensemble au-dessous de la température de transition vitreuse du polymère constituant le revêtement 15, et on démoule.

L'étape d'élévation de température de l'ensemble, lors du moulage, s'effectue en partie par le dégagement calorifique obtenu par la réaction exothermique de polymérisation du polymère thermodurcissable formant le revêtement 15. Généralement, cette élévation de température n'est toutefois pas suffisante, et on complète par un apport extérieur d'énergie calorifique, en chauffant le moule par une source extérieure d'énergie calorifique.

Le procédé de l'invention est compatible avec l'utilisation, lors de l'empilage de l'étape préalable, d'ébauches d'éléments de renforts inférieur 1 et/ou supérieur 3 comprenant un tissu préimprégné de résine thermodurcissable non entièrement réticulée. Cette résine thermodurcissable peut être une résine polyester non saturée, ou une résine époxy.

Le procédé est également compatible avec l'utilisation, lors de l'empilage de l'étape préalable, d'ébauches d'éléments de renforts inférieur 1 et/ou supérieur 3 comprenant un élément en matériau thermoplastique armé de fibres. Ledit matériau thermoplastique peut être un polyamide, un polyester, un polycarbonate ou PEI (Polyéther Imide).

Le procédé est également compatible avec l'utilisation, lors de l'empilage de l'étape préalable, d'éléments de renfort comprenant des éléments métalliques, éventuellement associés à des films périphériques assurant l'adhérence avec les autres matières de la structure du ski.

Selon l'invention, on peut ainsi réaliser une structure de ski dans laquelle les éléments de renforts inférieur 1 et supérieur 3 sont en une même matière ou en des matières différentes prises parmi les tissus préimprégnés de résine thermodurcissable, les matériaux thermoplastiques armés de fibres de préférence continues ou les métaux.

Par le fait que, lors du moulage, une élévation de température intervient pour la polymérisation du revêtement 15, on peut avantageusement utiliser cette élévation de température pour terminer la polymérisation de la matière formant les ébauches de renforts inférieur 1 et/ou supérieur 3 lorsqu'ils sont obtenus à l'aide d'une résine thermodurcissable non entièrement réticulée. Cette élévation de température, lors du moulage, favorise également l'adhérence des éléments de renfort 1 et 3 lorsqu'il sont obtenus à partir d'un matériau thermoplastique armé de fibres, ou d'un élément métallique associé à des films assurant l'adhérence.

Au cours de l'étape de moulage, on prévoit avantageusement des moyens pour maintenir provisoirement en position le sous-ensemble de résistance mécanique sur les éléments inférieurs du ski, avant et pendant l'injection du polymère thermodurcissable formant le revêtement 15.

Selon un premier mode de réalisation, les moyens de maintien peuvent comprendre les carres inférieures du ski 11 et 12, comme le représente la figure 3, entre lesquelles vient s'encastrer partiellement le sous-ensemble de résistance mécanique. Les carres 11 et 12 assurent un calage latéral.

Le maintien peut être amélioré en prévoyant des moyens favorisant l'adhérence de la face inférieure de sous-ensemble de résistance mécanique sur la face supérieure des éléments inférieurs du ski. On peut en particulier prévoir des états de surfaces auto-adhérents.

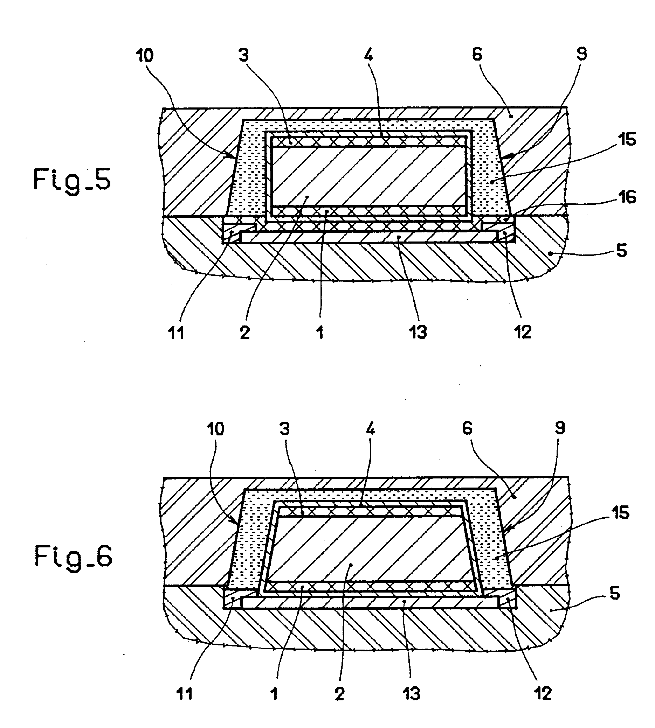

Ou encore comme on peut le voir sur la figure 5, on peut ajouter aux éléments inférieurs du ski un renfort supérieur 16 en tissu préimprégné de résine thermodurcissable recouvrant les carres inférieures 11 et 12 de façon à améliorer le collage du revêtement de protection 15 sur l'ensemble que forment les éléments inférieurs de ski.

On peut en outre favoriser l'adhérence du sous-ensemble de résistance mécanique sur les éléments inférieurs du ski par une élévation préalable de température des éléments inférieurs du ski, c'est-à-dire une élévation préalable de température de la partie inférieure 5 du moule, avant l'injection.

On peut également favoriser l'adhérence du sous-ensemble de résistance mécanique sur les éléments inférieurs du ski par un échauffement préalable de la face inférieure 14 dudit sous-ensemble de résistance mécanique pour réactiver son pouvoir adhérent juste avant sa pose dans le moule 5.

Lors de l'étape préalable de constitution du sous-ensemble de résistance mécanique, les ébauches de renforts inférieur 1 et supérieur 3 peuvent être en fibres de verre imprégnées, en alliage d'aluminium, en acier, en carbone, en métal amorphe. L'imprégnation peut se faire par une résine thermodurcissable humide ou partiellement réticulée choisie dans le groupe constitué par les polyesters, les époxydes, les polyuréthanes, les résines phénoliques.

En alternative, l'imprégnation peut se faire au moyen d'une résine thermoplastique choisie dans le groupe constitué par les polyamides, les polycarbonates, les PEI (Polyéther Imide) et polyester thermoplastique.

Le revêtement 15 peut être réalisé par injection d'un élastomère thermodurcissable de type polyuréthane.

Le noyau 2 peut comporter des faces latérales parallèles.

En alternative, le noyau 2 peut comporter avantageusement des faces latérales inclinées et/ou incurvées, présentant une forme similaire à celle des faces latérales généralement inclinées et/ou incurvées d'un ski alpin, comme on peut le voir sur la figure 6.

La structure de ski obtenue selon le procédé de l'invention comprend ainsi :
- un noyau 2,
- un élément de renfort supérieur 3 appliqué sur la face supérieure du noyau 2,
- un élément de renfort inférieur 1 appliqué sur la face inférieure du noyau 2,
- un film 4 entourant lesdits éléments de renfort et le noyau,
- des éléments inférieurs tels que les carres inférieures 11 et 12 et la semelle de glisse 13,
- une couche supérieure 15 de protection en polymère thermodurcissable.

La présente invention n'est pas limitée aux modes de réalisation qui ont été explicitement décrits, mais elle en inclut les diverses variantes et généralisations contenues dans le domaine des revendications ci-après.

## Revendications

1. Procédé d'assemblage d'un ski où
a) au cours d'une étape préalable, on réalise un sous-ensemble de résistance mécanique par :
- empilage d'au moins un renfort inférieur (1), un noyau (2) et un renfort supérieur (3),
- insertion dudit empilage dans une gaine rétractable (4) en une matière présentant un pouvoir d'adhésion avec les éléments destinés à être en contact avec elle dans la structure du ski,
- rétraction de la gaine (4),
b) au cours d'une étape unique de moulage, on assemble les éléments constitutifs du ski dans un moule en deux parties (5, 6):
- on pose les éléments inférieurs de structure de ski comprenant notamment les carres inférieures (11, 12) et la semelle de glisse (13),
- on pose le sous-ensemble de résistance mécanique (1, 2, 3, 4) sur les éléments inférieurs de structure de ski,
- on ferme le moule (5, 6),
- on injecte un polymère thermodurcissable pour former, autour du sous-ensemble de résistance mécanique, le revêtement de protection du ski (15).

2. Procédé selon la revendication 1, caractérisé en ce qu'après injection du polymère s'effectue une étape d'élévation de température de l'ensemble permettant la polymérisation du polymère thermodurcissable puis une étape de refroidissement de l'ensemble au-dessous de la température de transition vitreuse du revêtement de protection (15).

3. Procédé selon la revendication 2, caractérisé en ce que l'étape d'élévation de température de l'ensemble s'effectue avec apport extérieur d'énergie calorifique.

4. Procédé selon l'une des revendications 2 ou 3, caractérisé en ce que l'un au moins des renforts inférieur (1) et supérieur (3) comprend, dans l'empilage de l'étape préalable, un tissu préimprégné de résine thermodurcissable non entièrement réticulée.

5. Procédé selon la revendication 4, caractérisé en ce que ladite résine thermodurcissable est une résine polyester non saturée ou une résine époxy.

6. Procédé selon l'une quelconque des revendications 1 à 5, caractérisé en ce que l'un au moins des renforts inférieur (1) et supérieur (3) comprend, dans l'empilage de l'étape préalable, un élément en matériau thermoplastique armé de fibres.

7. Procédé selon la revendication 6, caractérisé en ce que ledit matériau est un polyamide, un polyester, un polycarbonate ou un Polyéther Imide.

8. Procédé selon l'une quelconque des revendications 1 à 7, caractérisé en ce que l'un au moins des renforts inférieur (1) et supérieur (3) comprend, dans l'empilage de l'étape préalable, un élément métallique associé à des films assurant l'adhérence avec les autres matières de la structure du ski.

9. Procédé selon l'une quelconque des revendications 1 à 8, caractérisé en ce que, au cours de l'étape de moulage, des moyens de maintien assurent le maintien provisoire en position du sous-ensemble de résistance mécanique (1, 2, 3, 4) sur les éléments inférieurs du ski (11, 12, 13) avant et pendant l'injection du polymère thermodurcissable (15).

10. Procédé selon la revendication 9, caractérisé en ce que les moyens de maintien comprennent les carres inférieures du ski (11, 12) entre lesquelles vient s'encastrer partiellement le sous-ensemble de résistance mécanique (1-4), assurant un calage latéral.

11. Procédé selon l'une des revendications 9 ou 10, caractérisé en ce que les moyens de maintien comprennent un état de surface assurant l'adhérence de la face inférieure (14) de sous-ensemble de résistance mécanique sur la face supérieure des éléments inférieurs du ski (11-13).

12. Procédé selon la revendication 11, caractérisé en ce qu'on favorise l'adhérence du sous-ensemble de résistance mécanique (1-4) sur les éléments inférieurs du ski (11-13) par élévation préalable de température des éléments inférieurs du ski (11-13).

13. Procédé selon la revendication 11, caractérisé en ce qu'on favorise l'adhérence du sous-ensemble de résistance mécanique (1-4) sur les éléments inférieurs du ski (11-13) par échauffement préalable de la face inférieure (14) dudit sous-ensemble de résistance mécanique (1-4) pour réactiver son pouvoir adhérent avant pose dans le moule (5, 6).

14. Procédé selon l'une quelconque des revendications 1 à 13, caractérisé en ce que le noyau (2) comporte des faces latérales parallèles.

15. Procédé selon l'une quelconque des revendications 1 à 13, caractérisé en ce que le noyau (2) comporte des faces latérales incurvées et/ou inclinées.

16. Procédé selon l'une quelconque des revendications 1 à 15 caractérisé en ce que les éléments inférieurs de structure du ski comprennent un renfort supérieur (16) en tissu préimprégné de résine thermodurcissable non entièrement réticulée recouvrant les carres inférieures (11, 12).

17. Procédé selon l'une quelconque des revendications 1 à 16, caractérisé en ce que la gaine rétractable (4) est choisie parmi les polyuréthanes thermoplastiques, les copolyamides, ABS (Acrylo Nitrile Butadiène Styrène), les polyéthylènes et les copolymères d'éthylènes greffés par action d'acide carboxylique, ester d'acide carboxylique ou son anhydre, ou les ionomères.

## Patentansprüche

1. Verfahren zum Zusammenbau eines Ski, bei dem
a) im Verlaufe eines vorherigen Schrittes eine Untereinheit mit mechanischer Widerstandsfähigkeit verwirklicht wird durch:
Stapeln von mindestens einem unteren Verstärkungselement (1), einem Kern (2) und einem oberen Verstärkungselement (3),
Einführen des Stapels in eine einziehbare Umhüllung (4) aus einem Material, welches eine Haftfähigkeit mit den Elementen aufweist, welche dazu bestimmt sind, mit ihr im Aufbau des Ski in Kontakt zu sein,
Einziehen der Umhüllung (4),
b) im Verlaufe eines einzigen Formungsschrittes die den Ski bildenden Elemente in einer Form aus zwei Teilen (5, 6) zusammengebaut werden:
man bringt die unteren Elemente des Skiaufbaus ein, welche insbesondere die unteren Kanten (11, 12) und die Gleitsohle (13) enthalten,
man legt die Untereinheit (1, 2, 3, 4) mit mechanischer Widerstandsfähigkeit auf die unteren Elemente des Skiaufbaus,
man schließt die Form (5, 6),
man spritzt ein wärmehärtbares Polymer ein, um um die Untereinheit mit mechanischer Widerstandsfähigkeit herum die Schutzumkleidung (15) des Ski zu formen.

2. Verfahren nach Anspruch 1, dadurch gekennzeichnet, daß nach Einspritzen des Polymers eine Temperaturerhöhung der Gesamtheit erfolgt, welche die Polymerisation des wärmehärtbaren Polymers erlaubt, dann eine Abkühlung der Gesamtheit unter die Glasübergangstemperatur der Schutzumkleidung (15).

3. Verfahren nach Anspruch 2, dadurch gekennzeichnet, daß die Temperaturerhöhung der Gesamtheit mit äußerer Zufuhr von Wärmeenergie erfolgt.

4. Verfahren nach Anspruch 2 oder 3, dadurch gekennzeichnet, daß mindestens eines der unteren und oberen Verstärkungselemente (1, 3) im Stapel des vorherigen Schrittes ein vorimprägniertes Gewebe aus nicht vollständig vernetztem, wärmehärtbarem Harz enthält.

5. Verfahren nach Anspruch 4, dadurch gekennzeichnet, daß das wärmehärtbare Harz ein nicht gesättigtes Polyesterharz oder ein Epoxyharz ist.

6. Verfahren nach einem der Ansprüche 1 bis 5, dadurch gekennzeichnet, daß mindestens eines der unteren und oberen Verstärkungselemente (1, 3) im Stapel des vorherigen Schrittes ein Element aus thermoplastischem faserverstärktem Material aufweist.

7. Verfahren nach Anspruch 6, dadurch gekennzeichnet, daß das Material ein Polyamid, Polyester ein Polycarbonat oder ein Polyetherimid ist.

8. Verfahren nach einem der Ansprüche 1 bis 7, dadurch gekennzeichnet, daß mindestens eines der unteren und oberen Verstärkungselemente (1, 3) im Stapel des vorherigen Schrittes ein metallisches Elemente aufweist, welches Folien zugeordnet ist, die das Haftvermögen mit anderen Materialien des Skiaufbaus gewährleisten.

9. Verfahren nach einem der Ansprüche 1 bis 8, dadurch gekennzeichnet, daß im Verlaufe des Formungsschrittes Halteeinrichtungen die provisorische Positionshalterung der Untereinheit (1, 2, 3, 4) mit mechanischer Widerstandsfähigkeit auf den unteren Elementen (11, 12, 13) des Ski vor und während der Einspritzung des wärmehärtbaren Polymers (15) gewährleisten.

10. Verfahren nach Anspruch 9, dadurch gekennzeichnet, daß die Halteeinrichtungen untere Kanten (11, 12) des Ski enthalten, zwischen welchen teilweise die Untereinheit (1 bis 4) mit mechanischer Widerstandsfähigkeit eingelassen wird, wodurch eine seitliche Einstellung gewährleistet wird.

11. Verfahren nach Anspruch 9 oder 10, dadurch gekennzeichnet, daß die Halteeinrichtungen einen Oberflächenzustand aufweisen, welcher das Haftvermögen der unteren Seite (14) der Untereinheit mit mechanischer Widerstandsfähigkeit auf der oberen Seite der unteren Elemente (11 bis 13) des Ski gewährleistet.

12. Verfahren nach Anspruch 11, dadurch gekennzeichnet, daß das Haftvermögen der Untereinheit (1 bis 4) mit mechanischer Widerstandsfähigkeit auf den unteren Elementen (11 bis 13) des Ski durch vorherige Temperaturerhöhung der unteren Elemente (11 bis 13) des Ski begünstigt wird.

13. Verfahren nach Anspruch 11, dadurch gekennzeichnet, daß das Haftvermögen der Untereinheit (1 bis 4) mit mechanischer Widerstandsfähigkeit auf den unteren Elementen (11 bis 13) des Ski durch vorheriges Erwärmen der unteren Seite (14) der Untereinheit (1 bis 4) mechanischer Widerstandsfähigkeit begünstigt wird, um ihr Haftvermögen vor dem Einlegen in die Form (5, 6) zu reaktivieren.

14. Verfahren nach einem der Ansprüche 1 bis 13, dadurch gekennzeichnet, daß der Kern (2) seitliche parallele Flächen aufweist.

15. Verfahren nach einem der Ansprüche 1 bis 13, dadurch gekennzeichnet, daß der Kern (2) seitliche gekrümmte und/oder geneigte Flächen aufweist.

16. Verfahren nach einem der Ansprüche 1 bis 15, dadurch gekennzeichnet, daß die unteren Aufbauelemente des Ski ein oberes Verstärkungselement (16) aus vorimprägniertem Gewebe aus wärmehärtbarem, nicht vollständig vernetztem Harz aufweisen, welches die unteren Kanten (11, 12) bedeckt.

17. Verfahren nach einem der Ansprüche 1 bis 16, dadurch gekennzeichnet, daß die einziehbare Umhüllung (4) ausgewählt wird aus thermoplastischem Polyurethanen, Copolyamiden, ABS (Acrylnitrilbutadien-Styrol), Polyethylenen und Copolymeren aus Ethylenen, veredelt durch die Wirkung von Carboxylsäure, Carboxylsäureesther oder ihrem Anhydrid, oder aus Ionomeren.

## Claims

1. Assembly method of a ski wherein:
a) during a previous step, a mechanical resistance sub-assembly is obtained by:
- stacking at least one lower reinforcement (1), a core (2) and one upper reinforcement (3),
- inserting said stack in a retractable sheath (4) made of a material having the capacity to adhere to the elements adapted to be in contact with it in the ski structure,
- retraction of sheath (4),
b) during a single molding step, the component elements of the ski are assembled in a two part mold (5, 6):
- the lower elements of the ski structure mainly comprising the lower running edges (11, 12) and the sliding sole (13) are positioned,
- the mechanical resistance sub-assembly (1, 2, 3, 4) is positioned on the lower elements of the ski structure,
- the mold is closed (5, 6),
- a thermohardenable polymer is injected so as to form, about the mechanical resistance sub-assembly, the protective coating of the ski (15).

2. Method as defined by claim 1, characterized in that after injection of the polymer, a step is undertaken for raising the temperature of the assembly enabling polymerization of the thermohardenable polymer, then a step is undertaken to cool the assembly to below the vitreous transition temperature of protective coating (15).

3. Device as defined by claim 2, characterized in that the step for raising the temperature of the assembly is undertaken by an external addition of calorific energy.

4. Device as defined by claims 2 or 3, characterized in that at least one of the lower (1) and upper reinforcements (3) comprises, in the previous stacking step, a material pre-impregnated with a thermohardenable resin which is not entirely cross-linked.

5. Method as defined by claim 4, characterized in that said thermohardenable resin is a non-saturated polyester resin or an epoxy resin.

6. Method as defined by any of claims 1-5, characterized in that at least one of the lower (1) and upper (3) reinforcements comprises, in the previous stacking step, an element made of a fiber reinforced thermoplastic material.

7. Method as defined by claim 6, characterized in that said material is a polyamide, a polyester, a polycarbonate or a polyether imide.

8. Method as defined by any of claims 1-7, characterized in that at least one of the lower (1) and upper (3) reinforcements comprises, in the previous stacking step, a metallic element associated to films, ensuring adhesion with the other materials of the ski structure.

9. Method as defined by any of claims 1-8, characterized in that, during the molding step, maintenance means ensure the provisional maintenance in position of the mechanical resistance sub-assembly (1, 2, 3, 4) on the lower elements of the ski (11, 12, 13) before and during injection of the thermohardenable polymer (15).

10. Method as defined by claim 9, characterized in that the maintenance means comprise the lower running edges of the ski (11, 12) between which the mechanical resistance sub-assembly (1-4) is partially embedded, ensuring a lateral wedging.

11. Method as defined by any of claims 9 or 10, characterized in that the maintenance means comprise a surface state ensuring adhesion of the lower surface (14) of the mechanical resistance sub-assembly on the upper surface of the lower elements of the ski (11-13).

12. Method as defined by claim 11, characterized in that the adhesion of the mechanical resistance sub-assembly (1-4) on the lower elements of the ski (11-13) is promoted by raising the temperature of the lower elements of the ski (1-13) beforehand.

13. Method as defined by claim 11, characterized in that the adhesion of the mechanical resistance sub-assembly (1-4) on the lower elements of the ski (11-13) is promoted by the previous heating of the lower surface (14) of said mechanical resistance sub-assembly (1-4) to reactivate its adhesive capacity before placement in the mold (5, 6).

14. Method as defined by any of claims 1-13, characterized in that the core (2) comprises parallel lateral surfaces.

15. Method as defined by any of claims 1-13, characterized in that core (2) comprises incurved and/or inclined lateral surfaces.

16. Method as defined by any of claims 1-15, characterized in that the lower elements of the ski structure comprise an upper reinforcement (16) made of a material preimpregnated with thermohardenable resin which is not entirely cross-linked, covering the lower running edges (11, 12).

17. Method as defined by any of claims 1-16, characterized in that the retractable sheath (4) is selected from among thermoplastic polyurethanes, copolyamides, ABS (styrene butadiene acrylonitrile), polyethylenes and ethylene copolymers grafted by the action of carboxylic acid, carboxylic acid ester or its anhydride or ionomers.
